# FASCICULE DE BREVET EUROPEEN

(11) **EP 2 679 292 B1**
(45) Date de publication et mention de la délivrance du brevet: **26.04.2017**
(21) Numéro de dépôt: 13174433.6
(22) Date de dépôt: 28.06.2013
(51) Int. Cl.: B01D 46/10

(54) **Filtre à air plat régénérable à cadre semi-rigide**
Regenerierbares flaches Filter für Luft mit halbstarrem Rahmen.
Regenerable flat filter for air with semi-rigid frame

(30) Priorité: 29.06.2012 FR 1256233
(43) Date de publication de la demande: 01.01.2014
(73) Titulaire: Schunk Electrographite SAS, 92000 Nanterre (FR)
(72) Inventeur: Garnier, Gilles, 92400 Courbevoie (FR); Couvert, Thierry, 35830 Betton (FR)
(74) Mandataire: Vidon Brevets & Stratégie

(56) Documents cités:
- WO-A1-2004/098368
- CA-A1- 2 145 933
- US-A- 5 525 145
- US-A- 5 689 969
- US-A- 6 156 089
- US-B1- 6 793 715

## Description

### 1. Domaine technique de l'invention

La présente invention concerne un filtre à air à usage industriel, permettant notamment d'arrêter des impuretés de l'air pénétrant dans un moteur électrique, ou dans une armoire électrique. L'invention concerne plus particulièrement des filtres à air plats de type régénérable.

### 2. Arrière-plan technologique

Il existe plusieurs types de filtres à air plats à usage industriel pouvant être utilisés pour arrêter des impuretés de l'air, et notamment de l'air pénétrant dans un moteur électrique ou une armoire de commandes électriques.

Ainsi, on connaît des filtres à air jetables, qui présentent l'avantage d'être peu coûteux à fabriquer. Ces filtres à air comprennent un média filtrant constitué d'une ou plusieurs couches d'un matériau de filtration jetable, qui peut être par exemple en papier, en tissus ou en matériau textile non tissé. Ces couches de matériau de filtration sont maintenues dans un cadre, qui permet d'assembler le filtre à un support. Le matériau de filtration utilisé étant généralement de poids faible, le cadre n'a pas besoin de présenter une solidité particulière. Dans les filtres de ce type, les impuretés présentent dans l'air s'accumulent, lors de la filtration, sur le matériau de filtration qu'ils finissent par obturer. En conséquence, un tel filtre doit être remplacé régulièrement, et les filtres usagés sont jetés.

On connaît également des filtres à air plats de type régénérable. Selon une solution technique connue pour les filtres à usage industriel, le matériau de filtration de tels filtres régénérables peut être constitué par un empilement de plaques en matériau plastique rigide ou semi-rigide, ondulées et percées de petits trous. L'empilement est réalisé de telle sorte que les ondulations des différentes plaques ne correspondent pas les unes avec les autres, ce qui créé une multitude d'espace de petites tailles entre les différentes plaques. Lors de la filtration, l'air circule à travers les trous percés dans chaque plaque, en suivant une trajectoire complexe imposée par la conformation des espaces apparaissant entre les plaques. Les plaques piègent alors les particules portées par l'air, qui peuvent, si le filtre est placé dans une position verticale, glisser par gravité entre les plaques jusqu'en bas du filtre.

L'accumulation des impuretés dans un tel filtre à air plat régénérable n'entraine que de très faibles pertes de charge, ce qui permet d'espacer considérablement les maintenances de tels filtres. Par ailleurs, la maintenance d'un filtre régénérable ne se fait pas par son remplacement, mais par un nettoyage, par exemple par agitation dans un bain d'eau froide ou tiède additionné de détergents. Le filtre régénérable peut alors retrouver la totalité ou la quasi totalité de ses propriétés initiales de filtration. Ainsi, les gains générés par une maintenance allégée et par une durée de vie plus longue compensent largement les coûts de fabrication de ces filtres régénérables, qui sont sensiblement plus élevés que ceux des filtres jetables. Document US 6 793 715 B1 divulgue un filtre plat avec un matériau de filtration fabriqué en matériau synthétique, lavable et semi-rigide. Les plaques constituant le matériau de filtration de filtres à air plats régénérables présentent en général un poids sensiblement plus important que les matériaux de filtration utilisés dans les filtres jetables. En conséquence, pour éviter que ce poids n'entraine des déformations du filtre, quand il est installé, le cadre maintenant le matériau de filtration des filtres régénérables sont habituellement constitués par des profilés métalliques en U soudés les uns aux autres. Chacun de ces profilés, dans un filtre à air plat à usage industriel, présente généralement une longueur comprise entre 20 cm et 1 m.

La fabrication de tels cadres est relativement onéreuse. Par ailleurs, ces cadres présentent eux-mêmes un poids important, qui augmentent le poids total des filtres. L'accrochage des filtres sur leurs supports doit en conséquence être réalisé par des crochets métalliques ou des coulisses métalliques dimensionnés pour supporter le poids important du filtre. Enfin, quand un filtre régénérable doit être jeté, son recyclage impose une opération de démontage pour séparer les éléments métalliques des éléments en matériau plastique. Un autre inconvénient des filtres de ce type est que les cadres métalliques peuvent être, dans des conditions atmosphériques agressives, sujets à la corrosion.

### 3. Objectifs de l'invention

La présente invention a pour objectif de palier ces inconvénients de l'art antérieur.

En particulier, un objectif de l'invention est de fournir des filtres à air plats régénérables dont les coûts de fabrication soient inférieurs à ceux des filtres à air plats régénérables de l'art antérieur.

Un autre objectif de l'invention est de fournir de tels filtres à air plats régénérables qui puissent être manipulés et installés de façon plus facile et efficace que les filtres à air plats régénérables de l'art antérieur.

Un autre objectif de l'invention est de fournir de tels filtres à air plats régénérables qui soient protégés efficacement de la corrosion.

Encore un autre objectif de l'invention est de fournir de tels filtres à air plats régénérables qui puissent être recyclés de façon plus facile que les filtres à air plats régénérables de l'art antérieur.

### 4. Exposé de l'invention

Ces objectifs, ainsi que d'autres qui apparaîtront plus clairement par la suite, sont atteints à l'aide d'un filtre à air plat régénérable à usage industriel, selon la revendication 1.

Il est à noter que le filtre à air plat selon l'invention est un filtre à usage industriel, qui se caractérise par des dimensions importantes (la longueur et la largeur du filtre sont normalement comprises entre 20 cm et 1 m). Ces filtres destinés à être placés sur des équipements industriels de grande dimension, comme des moteurs électriques de forte puissance, par exemple dans le domaine ferroviaire, ou des armoires de commandes électriques, présentent donc une structure très différente des filtres à usage domestique qui équipent par exemple les équipements électroménagers ou les véhicules automobiles, dont les dimensions beaucoup plus petites permettent de négliger les problèmes de poids et de rigidité se posant pour les filtres à usage industriel.

Ainsi, contrairement aux cadres métallique de l'art antérieur, les cadres selon l'invention présente une semi rigidité leur permettant d'être plaqués contre un support qui n'est pas parfaitement plat. Cette semi-rigidité peut se définir par le fait que, quand une première extrémité du cadre est maintenue en position, une force de 10 N appliquée sur une seconde extrémité, opposée à la première extrémité, dans une direction sensiblement perpendiculaire au plan du filtre, entraine un déplacement (ou flèche) supérieur à 10 % de la distance entre la première extrémité et la seconde extrémité, sans entrainer de détérioration du cadre.

La longueur et la largeur du cadre étant normalement supérieures à 20 cm, pour un filtre à usage industriel, cette semi-rigidité du cadre permet donc au minimum une flèche de 2 cm sous l'action d'une force de 10 N. Il est à noter que cette flèche peut être beaucoup plus importante. Cependant, pour garder le caractère semi-rigide, il est préférable que, quand la première extrémité du cadre est maintenue en position, une force de 10 N appliquée sur la seconde extrémité, opposée à la première extrémité, dans une direction sensiblement perpendiculaire au plan du filtre, n'entraine pas un déplacement (ou flèche) supérieur à 30 % de la distance entre la première extrémité et la seconde extrémité.

Par ailleurs, le filtre à air selon l'invention comprend un matériau de filtration comprenant (de préférence exclusivement) une pluralité de plaques en matériau plastique, percées et empilées les unes sur les autres. Un tel matériau de filtration, qui se distingue clairement des matériaux de filtration classiques composés de couches de textile ou de papier, est régénérable, c'est à dire qu'il peut retrouver la quasi-totalité de ses qualités de filtration avec un simple nettoyage. La présente invention ne s'applique qu'à ce type particulier de filtre, qui présente des problèmes techniques particuliers, notamment à cause de son poids.

Par ailleurs, l'usage d'un cadre en matériau plastique permet de réduire considérablement le poids du filtre.

Avantageusement, ledit cadre est formé par un assemblage de profilés en U en matière plastique, chevauchant la périphérie dudit matériau de filtration.

Un tel cadre permet un maintien efficace des matériaux de filtration.

De préférence, lesdits profilés en U en matière plastique formant ledit cadre périphérique sont assemblés par soudage.

L'assemblage est ainsi réalisé de manière simple et efficace.

Selon un mode de réalisation possible de l'invention, le filtre comprend des crochets pour l'accrochage du filtre sur un support adapté, lesdits crochets étant constitués de matériau plastique.

Ainsi, la totalité du filtre peut être constitué de matériau plastique, ce qui facilite notamment son entretien, sa régénération et son recyclage.

De préférence, dans ce cas, lesdits crochets sont assemblés audit cadre périphérique par emboitement avec déformation élastique.

Le montage des crochets est ainsi très facile à réaliser.

Selon un autre mode de réalisation possible de l'invention, le filtre à air comprend une bande périphérique aimantée, porté par ledit cadre périphérique, permettant d'assurer la fixation du filtre sur un support en matériau magnétique.

Ce mode de fixation est particulièrement efficace est facile à mettre en oeuvre. Un tel filtre peut facilement être utilisé sur un support en acier ou en fer, sans adaptation préalable de ce support.

Selon encore un autre mode de réalisation possible de l'invention, le filtre à air comprend une bande périphérique de matériau auto agrippant, porté par ledit cadre périphérique, permettant d'assurer la fixation du filtre sur un support en matériau permettant l'agrippement de ladite bande.

De tels matériaux auto agrippant sont peu onéreux et faciles à mettre en oeuvre. De préférence, ils peuvent être constitués de matériau plastique, de telle sorte que l'intégralité du filtre soit réalisé en matériau plastique.

De préférence, ladite bande périphérique est prévue sur toute la périphérie dudit cadre, afin d'assurer un contact étroit entre ledit cadre périphérique et ledit support.

Dans ce cas, de façon avantageuse, la bande périphérique peut causer un contact étroit rendant inutile la présence de joint d'étanchéité entre le cadre et son support. Ce mode de réalisation mettant en oeuvre un mode de fixation linéaire périphérique permet donc de réaliser des filtres plus simples, sans joint d'étanchéité.

Selon un mode de réalisation avantageux de l'invention, ledit matériau de filtration peut être composé d'au moins deux zones de filtrations, comprenant chacune une pluralité de plaques en matériau plastique, lesdites zones de filtrations étant séparées les unes des autres par des renforts constitués de profilés en matière plastique.

Un tel mode de réalisation comprenant plusieurs zones de filtrations permet de réaliser des filtres de grande taille et présentant une semi-rigidité et une solidité suffisante. Ladite pluralité de plaques en matériau plastique comprend au moins deux plaques présentant des ondulations différentes.

Les plaques peuvent ainsi former un piège à particules efficace et facilement régénérable.

Selon un mode de réalisation avantageux de l'invention, le matériau plastique constituant lesdites plaques dudit matériau de filtration et le matériau plastique sont choisis parmi des matériaux présentant une résistance au feu et à la fumée répondant aux exigences de la classe M1F1 de la norme NF F 16-101.

Ainsi, le filtre selon l'invention peut être utilisé dans des conditions exigeant une bonne résistance au feu et à la fumée, par exemple sur du matériel roulant ferroviaire. Dans ce cas, les autres composants du filtre, et notamment les moyens de fixation du filtre à son support, sont avantageusement également choisis dans des matériaux résistant au feu et à la fumée.

### 5. Liste des figures

D'autres caractéristiques et avantages de l'invention apparaitront plus clairement à la lecture de la description suivante de modes de réalisation préférentiels, donnés à titre de simples exemples illustratifs et non limitatifs, et des dessins annexés, parmi lesquels :
- la figure 1 est une vue en perspective, partiellement coupée, d'un filtre selon un premier mode de réalisation de l'invention ;
- la figure 2 est une vue en perspective de plaques constituant le matériau de filtration du filtre de la figure 1 ;
- la figure 3 est une vue de coupe partielle du cadre du filtre de la figure 1 ;
- la figure 4 est une vue en perspective, partiellement coupée, d'un filtre selon un deuxième mode de réalisation de l'invention ;
- la figure 5 est une vue de dessus schématique de dessus d'un filtre selon un autre mode de réalisation de l'invention.

### 5. Description détaillée de modes de réalisation

### 6.1. Principe général de l'invention

Le principe général de la présente invention consiste à réaliser un filtre à air plat régénérable à usage industriel, comprenant un matériau de filtration comprenant une pluralité de plaques percées et ondulées, dans lequel le cadre maintenant ce matériau de filtration est fabriqué en matière plastique.

Un filtre à usage industriel, au sens du présent brevet, est un filtre de grande dimension, présentant une longueur et une largeur qui sont normalement supérieures à 20 cm, et sont en général inférieures à 1m.

Grace à l'utilisation de ce matériau plastique, le cadre est semi rigide. Par « semi-rigide », on comprend que le filtre peut se déformer faiblement sous l'action d'une force relativement faible. Il est notamment avantageux que, quand une première extrémité du cadre est maintenue en position, une force de 10 N appliquée sur une seconde extrémité, opposée à la première extrémité, dans une direction sensiblement perpendiculaire au plan du filtre, entraine un déplacement (ou flèche) supérieur à 10 % de la distance entre la première extrémité et la seconde extrémité, sans entrainer de détérioration du cadre.

La longueur et la largeur du cadre étant normalement supérieures à 20 cm, pour un filtre à usage industriel, cette semi-rigidité du cadre permet donc au minimum une flèche de 2 cm sous l'action d'une force de 10 N. Il est à noter que cette flèche peut être beaucoup plus importante. Cependant, pour garder le caractère semi-rigide, il est préférable que, quand la première extrémité du cadre est maintenue en position, une force de 10 N appliquée sur la seconde extrémité, opposée à la première extrémité, dans une direction sensiblement perpendiculaire au plan du filtre, n'entraine pas un déplacement (ou flèche) supérieur à 30 % de la distance entre la première extrémité et la seconde extrémité. Ainsi, le filtre conserve une rigidité suffisante pour permettre une manipulation facile par un opérateur.

Ainsi, à titre d'exemple, un filtre carré selon l'invention dont les côtés mesurent 56 cm et dont trois des coins sont maintenus dans un plan peut voir son quatrième coin subir un déplacement de 15,5 cm, quand une force de 8 N est appliquée sur ce coin, dans une direction sensiblement perpendiculaire au plan du filtre.

Ainsi, le caractère semi-rigide du cadre selon l'invention, qui est très différent du caractère rigide des cadres métallique, permet que ce cadre soit plaqué contre une surface qui n'est pas parfaitement plane, sans être détérioré et sans que sa déformation génère des efforts trop importants au niveau des fixations.

### 6.2. Filtre à air plat régénérable

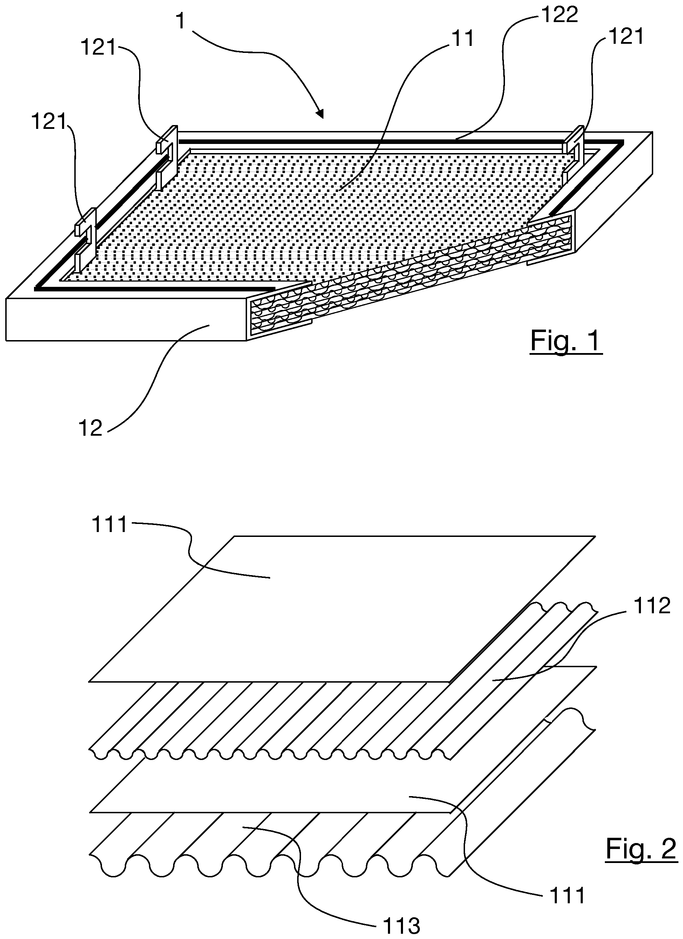

La figure 1 représente un premier mode de réalisation possible d'un tel filtre selon l'invention. Ce filtre 1 est composé d'un matériau de filtration 11 maintenu dans un cadre 12.

Le matériau de filtration 11 est du type régénérable. Il est constitué d'un empilement de plaques d'un matériau plastique, par exemple en en PVC (polychlorure de vinyle), qui sont percées d'une pluralité de trous. Certaines des plaques du type utilisé pour constituer ce matériau de filtration sont représentées par la figure 2. Sur cette figure, on peut voir que certaines plaques 111 sont plates, et que d'autres plaques 112 et 113 présentent des ondulations de tailles différentes. À titre d'exemple, une plaque 111 en PVC (polychlorure de vinyle) peut présenter une épaisseur de l'ordre de 0,3 mm. Une plaque 112 présentant de petites ondulations peut présenter une épaisseur globale de l'ordre d'un millimètre, et une plaque 113 présentant de grandes ondulations peut présenter une épaisseur globale de l'ordre de 4 mm. Ces plaques présentant des ondulations différentes peuvent être percées d'une pluralité de trous (non représentée sur la figure 2) dont le diamètre peut être de l'ordre de 2 mm, et qui sont espacés les uns des autres d'une distance de l'ordre de 0,5 mm.

Ces plaques sont empilées les unes sur les autres, en alternant de préférence des plaques présentant des ondulations plus fortes avec des plaques présentant des ondulations plus faibles, d'une façon connue en elle-même de l'Homme du Métier. Cet empilement constitue ainsi un matériau de filtration régénérable, dont les performances de filtration peuvent être fonctions des dimensions des plaques utilisées et du nombre de plaques (par exemple de l'ordre d'une dizaine) mises en oeuvre dans l'empilement.

Selon les modes de réalisation, il est possible de placer des grilles de part et d'autre du matériau de filtration. Dans ce cas, ces grilles sont avantageusement constituées en matériau plastique pour que l'intégralité du filtre soit constituée de matériaux du même type.

Par « filtre régénérable », on comprend que le matériau de filtration mis en oeuvre dans le filtre peut, quand il est encrassé par les impuretés de l'air qui a été filtré, être lavé pour éliminer ces impuretés et rendre au filtre ses performances de filtration. Ce type de filtres présente également d'autres avantages par rapport aux filtres jetables. Ainsi, ils génèrent une perte de charge plus faible, et peuvent être utilisés pendant une durée nettement supérieure sans présenter un encrassement nécessitant une maintenance.

### 6.3. Cadre périphérique en matière plastique

Les différentes plaques de l'empilement constituant le matériau de filtration 11 du filtre 1 doivent être maintenues en place par un cadre périphérique 12. Selon l'invention, ce cadre périphérique est constitué d'une matière plastique, c'est à dire d'un matériau synthétique comprenant un polymère comme matière de base. Un tel choix de matière, pour un filtre plat de type régénérable, n'était pas évident pour l'Homme du Métier. En effet, les filtres plats de ce type présentent des dimensions relativement importantes. Par ailleurs, le matériau de filtration utilisé pèse plus lourd que les matériaux de filtration de type jetable. Pour supporter ce poids avec un cadre de grandes dimensions, de telle sorte qu'il présente un niveau de rigidité suffisant, l'Homme du Métier considérait que la seule solution était de mettre en oeuvre un cadre métallique, par exemple formé par des profilés à section en U.

Le cadre du filtre selon la présente invention, qui est composé d'un profilé en forme de U en matériau plastique, offre en effet à ce filtre une rigidité bien inférieure à celle des filtres du même type de l'art antérieur. Il est cependant apparu aux inventeurs qu'un tel filtre semi-rigide ne présentait que peu d'inconvénients par rapport aux filtres de l'art antérieur, et présentait, de façon surprenante, des avantages spécifiques.

Dans le mode de réalisation représenté à la figure 1, le cadre 12 est composé de quatre portions de profilé en U qui sont connectés par soudage, au niveau des quatre coins du cadre. Ce cadre 12 est équipé de crochets 121 qui sont destinés à l'accrochage du filtre 1 sur un support adapté, par exemple une paroi d'une armoire électrique ou du carter d'un moteur électrique, dans laquelle est définie une ouverture d'entrée d'air. Le cadre 12 est également équipé d'un joint 122 périphérique, permettant d'assurer l'étanchéité entre ce cadre 12 et le support sur lequel le filtre 1 est accroché par l'intermédiaire des crochets 121. Ce joint 122 permet donc d'éviter que de l'air pénètre par l'ouverture d'entrée d'air définie dans le support sans traverser le matériau de filtration 11.

### 6.4. Fixation des crochets

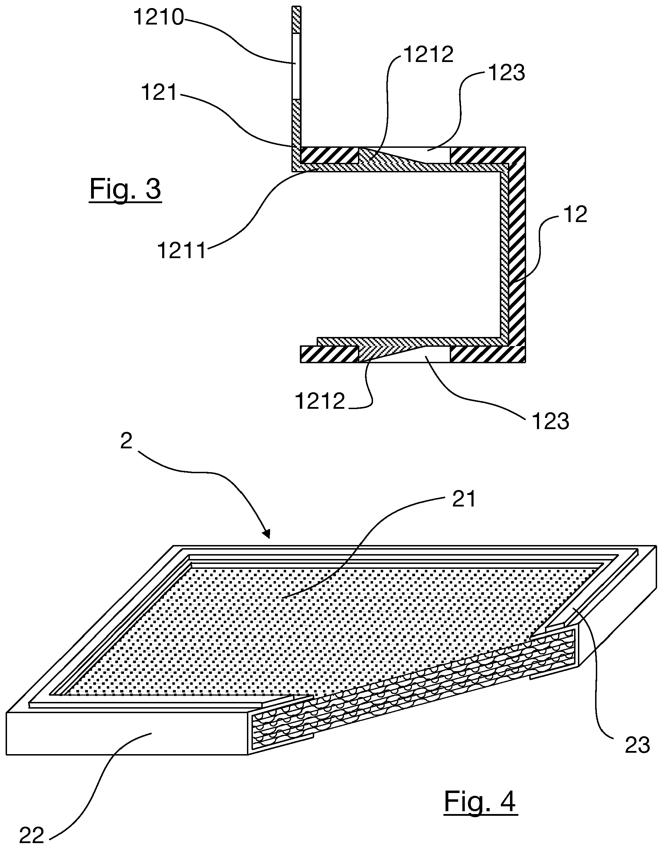

La figure 3 est une vue de coupe partielle du cadre 12 du filtre 1, au niveau de l'un des crochets 121. Du fait du poids relativement faible du filtre 1 par rapports aux filtres à air plats régénérables de l'art antérieur, dû à son cadre 12 en matière plastique qui présente un poids bien inférieur au cadre métallique de l'art antérieur, le filtre 1 peut être supporté par des crochets 121 constitués eux-mêmes de matériau plastique. Ces crochets peuvent par ailleurs être assemblés de façon très facile au cadre 12. Ainsi, le crochet 121 représenté à la figure 3 présente une portion de crochets 1210 et une portion de liaison 1211 qui permet une fixation au cadre par emboitement avec déformation élastique. Plus précisément, dans le mode de réalisation représenté, cette portion de liaison 1211 épouse la forme intérieure du profilé en U du cadre 12, et présente des éléments de verrous 1212 pouvant s'engager dans des trous correspondants 123 prévus dans les flans du profilé en U du cadre 12.

Lors de la mise en place du crochet 121, la portion de liaison 1211 se déforme élastiquement pour permettre l'engagement des éléments de verrous 1212 dans les trous correspondants 123. La conformation de la portion de liaison 1211 tend par la suite à maintenir les éléments de verrou dans les trous. Le démontage de ce crochet 121 reste possible en déformant de nouveau la portion de liaison 1211 pour faire sortir les éléments de verrous 1212 des trous 123. Cependant, ce démontage n'est pas possible quand l'élément de filtration 11 est placé à l'intérieur du profilé du cadre 12. L'attache des crochets 121 au cadre 12 se fait ainsi d'une façon extrêmement simple et fiable.

Il est à noter que, du fait de la relative flexibilité du cadre 12, l'assemblage du filtre 1 sur son support peut être fait de façon plus efficace et facile que dans l'art antérieur. En effet, lors de son installation, le cadre 12 peut se déformer légèrement pour mieux épouser la forme de son support. Cette légère déformation permet ainsi d'éviter des défauts d'étanchéité entre le cadre 12 et le support, qui pourraient provenir d'une déformation du cadre 12, dû par exemple à une mauvaise manipulation, ou à des défauts du support sur lequel le filtre 1 est monté.

### 6.5. Mode de réalisation à bande aimantée

La figure 4 représente, de façon partiellement coupée, un filtre 2 selon un second mode de réalisation possible de l'invention. Ce filtre 2 est composé d'un matériau de filtration 21 identique au matériau de filtration 11 qui a été décrit précédemment, maintenu par un cadre 22 formé par un profilé en U en matériau plastique, comme le cadre 12 qui a été décrit précédemment. Sur ce filtre 2, au moins une partie des crochets qui équipaient les filtres de l'art antérieur ou le filtre de la figure 1 ont été remplacés par une bande aimantée périphérique 23, qui est fixée sur l'un des flans du cadre 22. Cette fixation de la bande aimantée 23 peut par exemple se faire par collage, ou par l'intermédiaire d'une bande adhésive à double face.

Cette bande aimantée périphérique 23 permet d'assurer à la fois la fonction d'accrochage du filtre 2 sur son support, à condition que ce support soit réalisé dans un matériau magnétique tel que le fer ou l'acier, et d'assurer l'étanchéité de cette fixation. En effet, la bande magnétique 23 étant de préférence placée sur toute la périphérie du flan du cadre 22, elle est capable de solidariser, par attraction magnétique, la totalité de la périphérie du filtre avec son support. Il est à noter que le caractère semi-rigide du cadre 22 permet que cette solidarisation soit plus étroite, une légère déformation du cadre permettant de compenser des défauts de planéité éventuelle du cadre 22 ou de son support. Le contact assuré par la bande aimantée 22 est alors suffisamment étroit pour assurer l'étanchéité entre la cadre 22 et son support, et rendre inutile la présence d'un joint d'étanchéité périphérique.

Il est à noter que, dans des modes de réalisation alternatifs de l'invention, il serait possible de combiner des éléments de crochets, qui permettraient notamment d'assurer un positionnement facile du filtre, et une bande aimantée placée sur au moins une partie de la périphérie du cadre, permettant d'assurer une solidarisation facile et efficace sans qu'il soit nécessaire d'utiliser un joint d'étanchéité.

Une telle solidarisation par une bande aimantée n'est en pratique réalisable qu'avec l'utilisation d'un cadre en matière plastique, selon l'invention. En effet, avec les cadres métalliques de l'art antérieur, les filtres présentent un poids bien supérieur qui empêchent une solidarisation fiable par les bandes aimantées couramment utilisées.

Selon un mode de réalisation alternatif de l'invention, qui n'est également réalisable qu'avec un cadre en matière plastique, l'accrochage du filtre 2 sur son support peut être réalisé par une bande de matériau auto agrippant fixée, par exemple par collage, sur l'un des flans du cadre 22.

Cette bande de matériau auto agrippant, par exemple du type « crochet - boucle » commercialisé par la société VELCRO (marque déposée), permet d'assurer la fonction d'accrochage du filtre 2 sur son support, à condition que ce support soit couvert d'un matériau compatible permettant l'agrippement du matériau auto-agrippant, en solidarisant la totalité de la périphérie du filtre avec son support. Dans certains cas, le contact assuré par le matériau auto agrippant est suffisamment étroit pour assurer une étanchéité suffisante entre la cadre 22 et son support, et rendre inutile la présence d'un joint d'étanchéité périphérique. Dans d'autre cas, un joint périphérique complémentaire peut être prévu.

### 6.4. Mode de réalisation avec renfort central

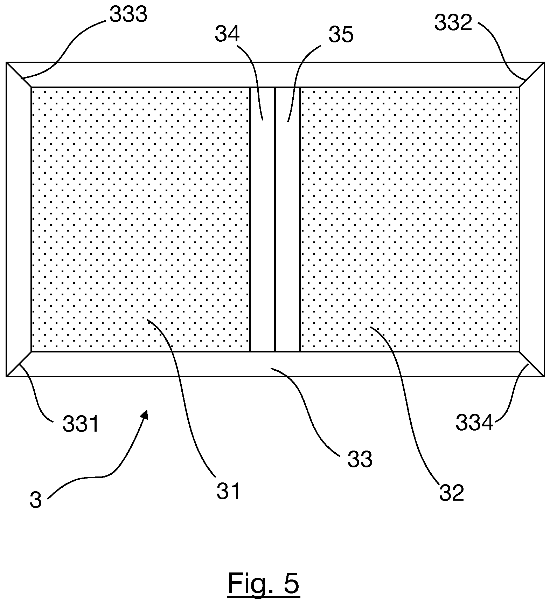

La figure 5 est une représentation schématique, en vue de dessus, d'une variante d'un filtre selon l'invention. Ce filtre 3 comporte deux zones de filtration 31 et 32 composées chacune d'un matériau de filtration semblable à celui décrit en relation avec les modes de réalisation précédents. Ces zones de filtration 31 et 32 sont maintenues par un cadre constitué en matériau plastique. Ce cadre présente une portion périphérique 33, formée de profilés en matériau plastique en forme de U, et un renfort central composé par deux éléments de profilés 34 et 35 qui peuvent être emboîtés ou solidarisés au cadre périphérique 33. Les deux profilés 34 et 35 présentent avantageusement une section en U et sont placés de façon à former un renfort central en forme de H, permettant de maintenir les bords de chacune des deux zones de filtration 31 et 32.

Ce renfort central permet de former le filtre 3 à partir de plaques d'éléments de filtration 31 et 32 de dimensions plus réduites, donc plus facile à fabriquer et moins coûteux, tout en gardant des dimensions globales du filtre 3, des capacités de filtration et des caractéristiques de rigidité satisfaisantes.

De façon avantageuse, les éléments de profilé 34 et 35 peuvent être du même type que les éléments de profilé utilisés pour fabriquer le cadre périphérique 33. Ce cadre périphérique 33 est lui-même formé de deux éléments de profilé en U soudés l'un à l'autre au niveau de deux de ses coins 331 et 332. Au niveau des deux autres coins 333 et 334, un découpage adapté des flancs du profilé permet qu'il soit pliée à angle droit. Un soudage des flans ainsi découpés permet par la suite de donner une bonne rigidité au cadre périphérique 33. Ce mode d'assemblage des profilés formant le cadre périphérique peut bien entendu être mis en oeuvre dans les autres modes de réalisation de l'invention.

Un filtre selon l'invention, qui comprend un cadre formé de matériau plastique, présente plusieurs avantages par rapport aux filtres à air régénérables plats de l'art antérieur. Ainsi, leur coût de production est nettement inférieur au coût de production des filtres à air régénérables plats présentant un cadre métallique. Par ailleurs, leur poids beaucoup plus faible permet, comme il a été vu, que leur accrochage puisse être réalisé avec des moyens beaucoup plus simple et moins coûteux à mettre en oeuvre. De plus, de tels filtres ne sont pas sensibles à la corrosion, et peuvent être utilisés sans difficulté dans des milieux à priori hostiles, tels que des milieux marins. Enfin, quand de tels filtres doivent être recyclés, il n'est pas nécessaire de les démonter pour séparer les types de matériau avant leur recyclage. En effet, l'ensemble du filtre est composé de matériau plastique.

Par ailleurs, selon un mode de réalisation avantageuse, les matériaux choisis pour réaliser un filtre selon l'invention peuvent présenter une bonne résistance au feu. Ainsi, il est possible de choisir le matériau plastique constituant les plaques du matériau de filtration et le matériau plastique constituant le cadre périphérique parmi des matériaux présentant une résistance au feu et à la fumée répondant aux exigences de la classe M1F1 de la norme NF F 16-101. Le respect de ces exigences est en effet obligatoire pour certaines utilisations, notamment pour l'utilisation du filtre selon l'invention sur du matériel roulant ferroviaire.

Dans ce cas, les autres éléments constituant le filtre, et notamment les moyens d'accrochage, et éventuellement les grilles pouvant être associées aux plaques de filtration, seront avantageusement réalisés dans un matériau répondant aux mêmes exigences.

## Revendications

1. Filtre à air plat régénérable à usage industriel, comprenant un matériau de filtration (11, 21, 31, 33) comprenant une pluralité de plaques (111, 112, 113) en matériau plastique, percées et empilées les unes sur les autres, ledit matériau de filtration (11, 21, 31, 32) étant maintenu par un cadre périphérique (12, 22, 33),
ledit cadre périphérique (12, 22, 33) étant réalisé en matériau plastique de façon à être semi-rigide,
**caractérisé en ce que** ladite pluralité de plaques en matériau plastique (111, 112, 113) comprend au moins deux plaques présentant des ondulations différentes.

2. Filtre à air selon la revendication 1 **caractérisé en ce que** ledit cadre périphérique (12, 22, 33) est formé par un assemblage de profilés en U en matière plastique, chevauchant la périphérie dudit matériau de filtration (11, 21, 31, 32)

3. Filtre à air selon l'une quelconque des revendications précédentes, **caractérisé en ce que** lesdits profilés en U en matière plastique formant ledit cadre périphérique (12, 22, 33) sont assemblés par soudage.

4. Filtre à air selon l'une quelconque des revendications précédentes, **caractérisé en ce qu'**il comporte des crochets (121) pour l'accrochage du filtre (1) sur un support adapté, lesdits crochets (121) étant constitués de matériau plastique.

5. Filtre à air selon la revendication 4, **caractérisé en ce que** lesdits crochets (121) sont configurés pour être assemblés audit cadre périphérique (12) par emboitement avec déformation élastique.

6. Filtre à air selon l'une quelconque des revendications précédentes, **caractérisé en ce qu'**il comprend une bande périphérique aimantée (23), porté par ledit cadre périphérique (22), permettant d'assurer la fixation du filtre (2) sur un support en matériau magnétique.

7. Filtre à air selon l'une quelconque des revendications 1 à 5, **caractérisé en ce qu'**il comprend une bande périphérique de matériau auto agrippant, porté par ledit cadre périphérique, permettant d'assurer la fixation du filtre sur un support en matériau permettant l'agrippement de ladite bande

8. Filtre à air selon l'une quelconque des revendications 6 et 7, **caractérisé en ce que** ladite bande périphérique est prévue sur toute la périphérie dudit cadre périphérique (22), afin d'assurer un contact étroit entre ledit cadre périphérique (22) et ledit support.

9. Filtre à air selon l'une quelconque des revendications précédentes, **caractérisé en ce que** ledit matériau de filtration est composé d'au moins deux zones de filtrations (31, 32), comprenant chacune une pluralité de plaques en matériau plastique, lesdites zones de filtrations étant séparées les unes des autres par des renforts constitués de profilés (34, 35) en matière plastique.

10. Filtre à air selon l'une quelconque des revendications précédentes, **caractérisé en ce que** le matériau plastique constituant lesdites plaques (111, 112, 113) dudit matériau de filtration (11, 21, 31, 33) et le matériau plastique constituant ledit cadre périphérique sont choisis parmi des matériaux présentant une résistance au feu et à la fumée répondant aux exigences de la classe M1F1 de la norme NF F 16-101.

## Patentansprüche

1. Flacher, regenerierbarer Luftfilter für industrielle Zwecke, der ein Filtermaterial (11, 21, 31, 33) mit einer Vielzahl von Platten (111, 112, 113) aus Kunststoffmaterial aufweist, die durchbohrt und aufeinander gestapelt sind, wobei das Filtermaterial (11, 21, 31, 32) durch einen umlaufenden Rahmen (12, 22, 33) gehalten wird,
wobei der umlaufende Rahmen (12, 22, 33) aus Kunststoffmaterial ausgebildet ist, um halbstarr zu sein,
**dadurch gekennzeichnet, dass** die Vielzahl von Platten aus Kunststoffmaterial (111,112, 113) wenigstens zwei Platten mit unterschiedlicher Welligkeit aufweist.

2. Luftfilter nach Anspruch 1, **dadurch gekennzeichnet, dass** der umlaufende Rahmen (12, 22, 33) durch eine Anordnung von U Profilen aus Kunststoffmaterial gebildet ist, die mit dem Umfang des Filtermaterials (11, 21, 31, 32) überlappen.

3. Luftfilter nach einem der vorstehenden Ansprüche, **dadurch gekennzeichnet, dass** die U Profile aus Kunststoffmaterial, die den umlaufenden Rahmen (11, 22, 33) bilden, durch Schweißen zusammengefügt sind.

4. Luftfilter nach einem der vorstehenden Ansprüche, **dadurch gekennzeichnet, dass** er Haken (121) zum Befestigen des Filters (1) auf einem angepassten Träger aufweist, wobei die Haken (121) aus Kunststoffmaterial gebildet sind.

5. Luftfilter nach Anspruch 4, **dadurch gekennzeichnet, dass** die Haken (121) eingerichtet sind, auf dem umlaufenden Rahmen (12) durch Einpassung mit elastischer Verformung montiert zu werden.

6. Luftfilter nach einem der vorstehenden Ansprüche, **dadurch gekennzeichnet, dass** er ein umlaufendes magnetisches Band (23) aufweist, das durch den umlaufenden Rahmen (22) getragen wird und das Sicherstellen der Befestigung des Filters (2) auf einem Träger aus magnetischem Material ermöglicht.

7. Luftfilter nach einem der Ansprüche 1 bis 5, **dadurch gekennzeichnet, dass** er ein umlaufendes Band aus selbsthaftendem Material aufweist, dass durch den umlaufenden Rahmen getragen wird und das Sicherstellen der Befestigung des Filters auf einem Träger aus einem Material, welches das Anhaften des Bandes ermöglicht, ermöglicht.

8. Luftfilter nach einem der Ansprüche 6 und 7, **dadurch gekennzeichnet, dass** das umlaufende Band über den gesamtem Umfang des umlaufenden Rahmens (22) vorgesehen ist, um einen engen Kontakt zwischen dem umlaufenden Rahmen (22) und dem Träger sicherzustellen.

9. Luftfilter nach einem der vorstehenden Ansprüche, **dadurch gekennzeichnet, dass** das Filtermaterial aus wenigstens zwei Filterzonen (31, 32) zusammengesetzt ist, die jede eine Vielzahl von Platten aus Kunststoffmaterial aufweist, wobei die Filterzonen voneinander durch Versteifungen, die aus Profilen (34, 35) aus Kunststoffmaterial gebildet sind, getrennt sind.

10. Luftfilter nach einem der vorstehenden Ansprüche, **dadurch gekennzeichnet, dass** das Kunststoffmaterial, welches die Platten (111, 112, 113) des Filtermaterials (11, 21, 31, 33) bildet, und das Kunststoffmaterial, das den umlaufenden Rahmen bildet, aus Materialien ausgewählt ist, die eine Beständigkeit gegen Feuer und Rauch aufweisen, die den Anforderungen der Klasse M1 F1 der Norm NF F 16-101 entsprechen.

## Claims

1. Regenerable flat filter for air for industrial use, comprising a filtration medium (11, 21, 31, 33) comprising a plurality of plastic plates (111, 112, 113), perforated and stacked on top of one another, the said filtration medium (11, 21, 31, 32) being held by a peripheral frame (12, 22, 33),
the said peripheral frame (12, 22, 33) being made of plastic so as to be semi-rigid,
**characterised in that** the said plurality of plastic plates (111, 112, 113) comprises at least two plates having different corrugations.

2. Air filter according to claim 1, **characterised in that** the said peripheral frame (12, 22, 33) is formed by an assembly of plastic U shaped sections, straddling the periphery of the said filtration medium (11, 21, 31, 32).

3. Air filter according to either of the preceding claims, **characterised in that** the said plastic U shaped sections forming the said peripheral frame (12, 22, 33) are joined together by welding.

4. Air filter according to any of the preceding claims, **characterised in that** it comprises hooks (121) for hanging the filter (1) on a suitable support, the said hooks (121) being made of plastic.

5. Air filter according to claim 4, **characterised in that** the said hooks (121) are formed to be joined to the said peripheral frame (12) by nesting, with elastic deformation.

6. Air filter according to any of the preceding claims, **characterised in that** it comprises a magnetised peripheral strip (23), borne by the said peripheral frame (22), whereby the filter (2) can be fitted to a support made of magnetic material.

7. Air filter according to any of claims 1 to 5, **characterised in that** it comprises a peripheral strip made of self-gripping material, borne by the said peripheral frame, whereby the filter can be fitted to a support made of a material making it possible for the said strip to be gripped.

8. Air filter according to either of claims 6 or 7, **characterised in that** the said peripheral strip is provided on the entire periphery of the said peripheral frame (22), so as to ensure close contact between the said peripheral frame (22) and the said support.

9. Air filter according to any of the preceding claims, **characterised in that** the said filtration medium is made up of at least two filtration zones (31, 32), each comprising a plurality of plastic plates, the said filtration zones being separated from one another by reinforcements formed from sections (34, 35) made of plastic.

10. Air filter according to any of the preceding claims, **characterised in that** the plastic forming the said plates (111, 112, 113) of the said filtration medium (11, 21, 31, 33) and the plastic forming the said peripheral frame are chosen from materials having fire and smoke resistance meeting the requirements of class M1F1 of standard NF (French Standards) F 16-101.
